# EUROPEAN PATENT APPLICATION

(11) **EP 2 159 967 A1**
(43) Date of publication of application: **03.03.2010**
(21) Application number: 08163248.1
(22) Date of filing: 29.08.2008
(51) Int. Cl.: H04L 12/413, G01R 19/25

(54) **Transmission of IEC 61850 9-2 network messages**

(71) Applicant: ABB Research AG, 8050 Zurich (CH)
(72) Inventor: Werner, Thomas, CH-5404, Baden (CH); Tournier, Jean-Charles, CH-5404, Baden (CH); Richter, Stefan, CH-5400, Baden (CH); Frei, Christian, CH-5442, Fislisbach (CH)
(74) Representative: ABB Patent Attorneys

(57) **Abstract**

The present invention is concerned with a reduction of data packet collisions or queuing scenarios in Substation Automation (SA) communication networks comprising a multitude of synchronized Intelligent Electronic Devices (IED) connected to the network and sending data packets in a cyclic fashion. According to the invention, the transmission or sending times of periodic messages or IEC 61850-9-2 data packets comprising digitized sampling data and multicast on a shared transmission media or common data bus arc coordinated. To this end, mutually distinct and predetermined transmission times within, or time offsets with respect to a start of, a communication cycle or periodic transmission interval of the SA system are attributed to each of the sending IEDs connected to a same section of the SA communication network. The time offset is handled by the sending IED's communication stack for 9-2 message transmission, at a layer above the physical layer itself implementing an unaltered CSMA-CA/CD algorithm.

## Description

### FIELD OF THE INVENTION

The invention relates to the field of data transmission in a Substation Automation (SA) system comprising a multitude of synchronized Intelligent Electronic Devices (IED) connected to a communication network and sending data packets in a cyclic fashion.

### BACKGROUND OF THE INVENTION

Substations in high and medium-voltage power networks include primary devices such as electrical cables, lines, bus bars, switches, power transformers and instrument transformers, which are generally arranged in switch yards and/or bays. These primary devices are operated in an automated way via a Substation Automation (SA) system. The SA system comprises secondary devices, among which Intelligent Electronic Devices (IED), responsible for protection, control and monitoring of the primary devices. The secondary devices may be assigned to hierarchical levels, i.e. the station level, the bay level, and the process level, the latter being separated from the bay level by a so-called process interface. The station level of the SA system includes an Operator Work Station (OWS) with a Human-Machine Interface (HMI) and a gateway to a Network Control Centre (NCC). IEDs on the bay level, also termed bay units or protection IEDs in what follows, in turn are connected to each other as well as to the IEDs on the station level via an inter-bay or station bus primarily serving the purpose of exchanging commands and status information.

Secondary devices on the process-level comprise sensors for voltage (VT), current (CT) and gas density measurements, contact probes for sensing switch and transformer tap changer positions, and/or actuators (I/O) for changing transformer tap positions, or for controlling switchgear like circuit breakers or disconnectors. Exemplary sensors such as non-conventional current or voltage transformers comprise an Analogue to Digital (AD) converter for sampling of analogue signals, and are connected to the bay units via a dedicated or intra-bay process bus, which can be considered as the process interface replacing the conventional hard-wired process interface. The latter connects conventional current or voltage transformers in the switchyard to the bay level equipment via dedicated Cu wires, in which case the analogue signals of the instrument transformers are sampled by the bay units.

A communication standard for communication between the IEDs of a substation has been introduced by the International Electrotechnical Committee (IEC) as part of the standard IEC 61850 entitled "communication networks and systems in substations". For non-time critical messages, IEC 61850-8-1 specifies the Manufacturing Message Specification (MMS, ISO/IEC 9506) protocol based on a reduced Open Systems Interconnection (OSI) protocol stack with the Transmission Control Protocol (TCP) and Internet Protocol (IP) in the transport and network layer, respectively, and Ethernet and/or RS-232C as physical media. For time critical messages, such as trip commands, IEC 61850-8-1 specifies the Generic Object Oriented Substation Events (GOOSE) build directly on the Ethernet link layer of the communication stack. For very time-critical signals at the process level such measured analogue voltages or currents IEC 61850-9-2 specifies the Sampled Values (SV) protocol which also builds directly on the Ethernet link layer. Hence, part 9 of the standard defines a format to publish, as multicast messages on an industrial Ethernet, digitized measurement data from current or voltage sensors on the process level. Such SV or other process data may be transmitted over an inter-bay process bus, making the transmitted information available to neighbouring bays. For instance for cost effective setups such as in medium or low-voltage substations, the inter-bay process bus and the station bus can be merged into one single communication network. In this case, the communication network can be considered an inter-bay process bus that transmits, in addition to the process data, command, status, and report related messages otherwise exchanged via a dedicated station bus.

For the purpose of synchronization with other internal data, sampling of analogue signals by an Analogue to Digital (A/D) converter of a process interface (in e.g. electronic or non-conventional current and voltage transformers having a digital output, merging units, and bay units) requires correct time stamping. In other words, the devices that sample analog values and send the digitized messages off to the network are synchronized to each other through a common source. This is today accomplished typically through a pulse-per-second signal coming from a GPS receiver, or through Ethernet-based protocols such as IEEE1588 guaranteeing accuracy levels which are suitable for those types of applications.

IEC 61850 defines several profiles for 9-2, a so-called full profile and a light edition (9-2LE). Common to both profiles is the main characteristics on how sampling data is encoded, time stamped and transmitted over an Ethernet-based network. In the present context, the sending frequency is relevant, which is dependent on the electrical network line frequency or period (50Hz or 60Hz) itself Data sampled 80 times per period is sent off the SA communication network in messages or packets at a rate of 4 kHz or 4.8 kHz for protection and control purposes, while 256 samples/period for revenue metering and power quality monitoring applications result in a rate of 12.8 kHz or 15.36 kHz, respectively.

Because of the time synchronization of the sending devices, peaks of 9-2 messages on the network, or in incoming queues of the network switches, in cycles as specified with the 9-2 profiles can be observed. Larger SA systems with more than just a few devices sending 9-2 traffic can experience reliability degradations due to 9-2 packets being delayed by more than the maximum acceptable delay as specified in the IEC 61850 standard for transmission level or distribution level. As an example, network switches can become a bottleneck if packets are queued for processing, or the IED device itself is at the origin of a transmission delay in case the network interface has to reschedule the sending due to a packet collision on the network. Resulting, the quality of the 9-2 transmission and the receiving of packets can be negatively impacted, due to e.g. packets not arriving on time, packets being reordered, packets being lost or the network being overloaded.

Shared media data access aiming at efficient and reliable access to a shared or common physical transmission media can be achieved in a number of different ways. In Carrier Sense Multiple Access (CSMA) protocols participating nodes verify if the media is in an idle state before transmitting data. Collisions can occur, and strategies addressing collisions are collision avoidance (CSMA-CA) and collision detection (CSMA-CD), the latter implementing a random wait time before trying to resend a data frame following detection of a collision. Ethernet is typically based on CSMA algorithms, leading to a nondeterministic, non-reliable frame transfer, and relying on higher layers of the OSI model (e.g. TCP/IP) to guarantee message delivery.

The 9-2 protocol utilizes the Ethernet protocol. Access to the physical media is based on CSMA-CA (collision avoidance) and -CD (collision detection) algorithms, which means that a packet can only be put on the SA communication network if the latter is idle, i.e. no other party is currently accessing the shared media. If the network is not available, then the network interface card generates a random wait time (CSMA-CD) before it tries to access the network again for sending a packet. If several retransmission attempts fail, packet transmission may be aborted altogether.

EP-A 1392023 discloses a power-saving wireless communication system implementing a short range communication link between devices advertising available information, and mobile user devices which may initiate a request for further information. One embodiment involves the use, by the advertising devices, of a *random* mean zero value offset time appended to the start of a carrier sensing mode at the beginning of a transmission frame. The offset increases the likelihood that a first advertising device will *recognize* the transmissions of another advertising device und hence conclude that a particular channel is busy. This will avoid unnecessary transmissions that will otherwise result in collisions due to the two advertisers being incapable of recognizing each other's transmission attempts while both in carrier sensing mode. The maximum time value for the random mean zero value offset time is considered to be equal to the Transmit/Receive switching time for preparing the transmission of the periodic advertisement message, and thus limited to a fraction of the packet length.

### DESCRIPTION OF THE INVENTION

It is an objective of the invention to reduce data packet collisions or queuing scenarios in Substation Automation (SA) communication networks comprising a multitude of synchronized Intelligent Electronic Devices (IED) connected to the network and sending data packets in a cyclic fashion. This objective is achieved by an SA system and a method of transmitting network messages according to claims 1 and 3, respectively. Further preferred embodiments are evident from the dependent patent claims.

According to the invention, the transmission or sending times of periodic messages or IEC 61850-9-2 data packets comprising digitized sampling data and multicast on a shared transmission media or common data bus are coordinated. To this end, mutually distinct and predetermined transmission times within, or time offsets with respect to a start of, a communication cycle or periodic transmission interval of the SA system are attributed to each of the sending IEDs connected to a same section of the SA communication network. The time offset is handled by the sending IED's communication stack for 9-2 message transmission, at a layer above the physical layer itself implementing an unaltered CSMA-CA/CD algorithm.

The invention takes advantage of the fact that the 9-2 protocol does not define that the 9-2 packets are time stamped when put on the network, nor sent or received in exactly specified time intervals. The relevant constraint defined in the protocol is that the transmission delay of the packets must not exceed a certain time. Since receiver implementations usually apply a buffer to compensate for inherent network latencies for the 9-2 packets, or for reordering packets depending on the sample count, distributing 9-2 packets across a minor window does not violate the 9-2 protocol definition, nor does it negatively impact client implementations.

In a preferred variant, the distinct transmission times are not predefined in a global manner irrespective of a particular SA system, but rather based on IEC 61850 network configuration and 9-2 transmission parameters of the SA system, in particular the number of connected IEDs sending 9-2 traffic and their sampling and/or sending frequency. The inverse of the latter defines the duration of the communication cycle, and the corresponding time interval is subdivided into a number of individual time slots and/or transmission times to be assigned to the various IEDs. By evenly dividing the time interval into slots of equal length, i.e. by equidistantly distributing the transmission times, the shortest delay between two successive 9-2 messages is maximised.

In a further refined variant, the number of initially connected IEDs is artificially increased in order to allow for a subsequent extension of the SA system by connecting additional or extension IEDs sending 9-2 traffic.

According to an advantageous embodiment, the determination of the transmission times or delays takes place in advance during an engineering phase of the SA system, and the resulting transmission times are included in the device-specific configuration file and subsequently loaded to the individual IEDs. Alternatively, the connected IEDs may agree on transmission times in a dynamic hand-shake procedure during start-up of the SA system.

In summary, by the coordinated or staggered transmission timing as proposed the following advantages can be achieved: Overall transmission time is reduced since the probability of inserted delays through the CSMA algorithms is reduced; Loss of packets or nondeterministic queuing of packets in the switches is reduced and ideally avoided; In shared networks (e.g., both 8-1 and 9-2) the reduction of peak loads decreases the probability of 8-1 messages being delayed; Resource utilization on the sending Network Interface Card NIC can be reduced (less checks for idle network) and therefore the throughput is increased.

### BRIEF DESCRIPTION OF THE DRAWINGS

The subject matter of the invention will be explained in more detail in the following text with reference to preferred exemplary embodiments which are illustrated in the attached drawings, in which:
Fig.1 shows an excerpt of a Substation Automation (SA) system,
Fig.2 schematically shows a network load over time in a 9-2 process bus with synchronized devices, and
Fig.3 depicts an equilibrated network load resulting in an embodiment of the invention.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

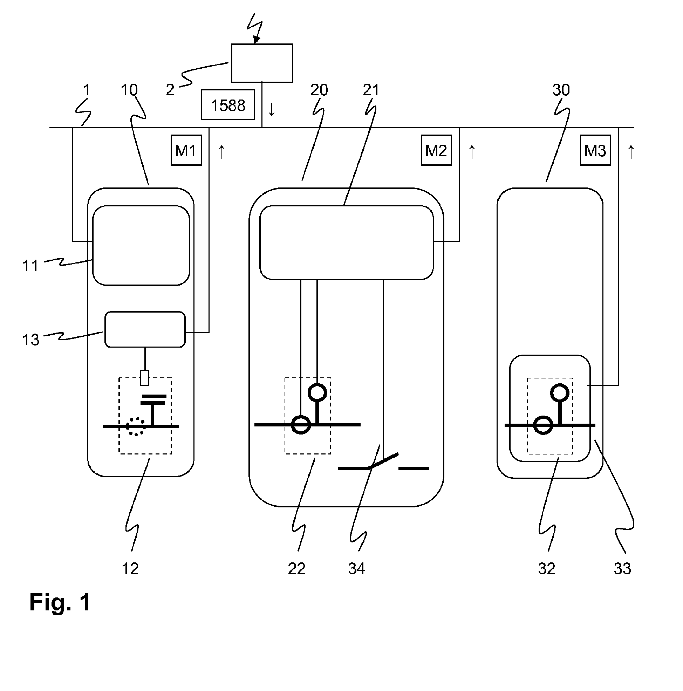

Fig.1 shows an excerpt of a Substation Automation (SA) system for three bays 10, 20, 30 of a substation. The SA system comprises a communication network 1, i.e. a station bus or a process bus extending beyond a single bay. Two protection IEDs 11, 21 execute protection functions on behalf of a first and second bay 10, 20, respectively, by evaluating input from sensors and operating actuators of the respective bay. In particular, the first bay 10 comprises non-conventional current and voltage sensors 12 capturing the voltage U and/or current I as exemplary process quantities at a particular location of bay 10. The sensors 12 are connected to a stand-alone Merging Unit 13 with a first process interface itself connected to the communication network 1. The second bay 20 comprises conventional instrument transformers 22 that are hardwired to protection IED 21. The latter in turn comprises a second process interface to communication network 1 that allows multicasting messages with process data from the instrument transformers 22. Furthermore, protection IED 21 is adapted to receive event-driven commands, and to operate a drive 34 as an exemplary actuator of a switching device in response thereto. In bay 30 finally, intelligent sensor device 33 with a third process interface is connected to the network 1 and transmits the sampled values of the process quantities measured by the actual sensors 32.

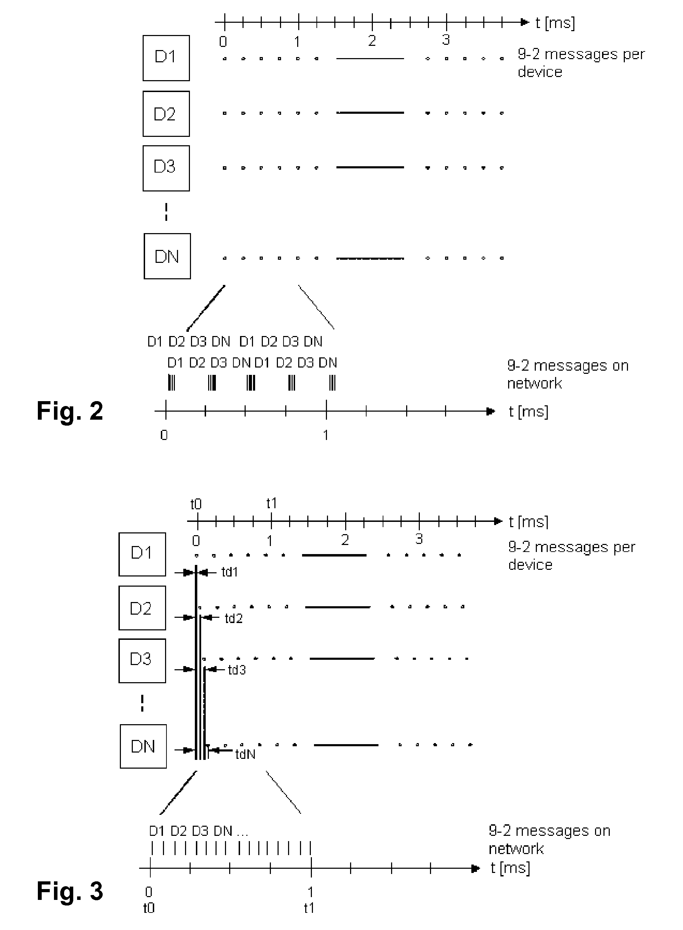

A GPS receiver 2 as a universal time-source handles time synchronization of the process interfaces in Merging Unit 13, protection IED 21, and sensor device 33, either through Ethernet-based protocols such as IEEE1588 or through a pulse-per-second signal distributed via a dedicated cable. Hence, the devices 13, 21, 33 participating in the 9-2 protocol are synchronized and do sample signals from the connected sensors 12, 22, 32 at predefined equidistant sampling times. They prepare network messages M1, M2, M3 comprising the sampled values, to be broadcasted conventionally over the SA communication network 1 without delay. Because of the stringent time synchronization of the sampling and sending IEDs, peaks of 9-2 messages do appear on the network 1 in cycles as specified with the 9-2 profiles, e.g., every 250 µs (50 Hz line frequency) or 208.33 µs (60Hz). This is depicted in Fig.2 for an arbitrary number of devices D1 ... DN.

Fig.3 depicts the resulting network load in an embodiment of the invention, in which the configuration of the SA system specifies the delay times td1 ... tdN from the sampling time t0 for each participating device sending 9-2 traffic. In detail, the staggering of 9-2 messages comprises the following steps:
- With an engineering tool, the 9-2 devices be included in the staggering algorithm are determined.
- The time window for a message levelling is determined out of the highest sending frequency of the participating devices (e.g., 4 kHz results in a time window of 250 µs).
- A safety margin is deducted from the time window, e.g. 10 µs, in order to avoid message sending overlaps with the next cycle.
- Each participating device now is assigned a unique time slot from the time window. E.g., device 1 is assigned +10 µs, device 2 is assigned +20 µs, and so forth. Depending on the time window, the number of participating devices has an upper limit. In the foregoing case, limiting the number of IEDs to 25 per subnetwork however does generally not constitute a problem.
- The calculated time slots are stored in a configuration and distributed to the individual device configurations.
- The devices are loaded with their device configuration.
- The 9-2 sending thread in the stack, which has a synchronization (usually through the OS) to the PPS or 1588 signal, is configured with the time slot offset from the device configuration.
- The result is that while the sampling of the messages is synchronized to the PPS signal, the transmission of the packets sees a constant offset defined by the time slot.
- Collisions during the packet transmission which still occur are handled via the network stack's CSMA-CD algorithms.

### LIST OF DESIGNATIONS

- 1: SA communication network
- 2: GPS receiver
- 10,20,30: bay
- 11,21: protection IED
- 12,22,32: sensor
- 13: merging unit
- 33: sensor device
- 34: actuator

## Claims

1. A Substation Automation SA system of a substation of an electric power system, comprising a plurality of Intelligent Electronic Devices IEDs (13, 21, 33) adapted to
- prepare, at the start Tᵢ of a communication cycle of the SA system, network messages (Mᵢ1, Mᵢ2, Mᵢ3) comprising sampled values of process quantities (U, I) measured by sensors (12, 22, 32) of the substation, and
- transmit the network messages (Mᵢ1, Mᵢ2, Mᵢ3) over a shared transmission media (1) of the SA system based on Carrier Sensing Media Access CSMA protocols,
**characterized in that** the IEDs (11, 21, 31) are adapted to transmit respective network messages (Mᵢ1, Mᵢ2, Mᵢ3) at distinct predetermined transmission times (Tᵢ1, Tᵢ2, Tᵢ3) within the communication cycle.

2. The SA system according to claim 1, **characterized in that** the distinct predetermined transmission times (Tᵢ1, Tᵢ2, Tᵢ3) are predetermined, based on a number N of IEDs (11, 21, 31) preparing and transmitting network messages, by equidistantly spacing the transmission times (Tᵢ1, Tᵢ2, Tᵢ3) of the number N of IEDs within the communication cycle.

3. A method of transmitting network messages (Mᵢ1, Mᵢ2, Mᵢ3) comprising sampled values of process quantities (U, I) measured by sensors (12, 22, 32) of a substation of an electric power system, comprising
- predetermining, for each of a plurality of Intelligent Electronic Devices IEDs (13; 21; 33) of a Substation Automation SA system of the substation, a distinct transmission time (Tᵢ1; Tᵢ2; Tᵢ3),
- preparing, at the start Tᵢ of a communication cycle of the SA system and by each of the plurality of IEDs (11; 21; 31), respective network messages (Mᵢ1; Mᵢ2; Mᵢ3), and
- transmitting, by each of the plurality of IEDs (13; 21; 33) and at the IED's distinct predetermined transmission time (Tᵢ1, Tᵢ2, Tᵢ3) within the communication cycle, the network messages (Mᵢ1; Mᵢ2; Mᵢ3) over a shared transmission media (1) of the SA system based on Carrier Sensing Media Access CSMA protocols.

4. The method according to claim 3, **characterized in that** it comprises
- predetermining the distinct transmission times (Tᵢ1, Tᵢ2, Tᵢ3), based on a number N of IEDs (11, 21, 31) preparing and transmitting network messages, by equidistantly spacing the transmission times (Tᵢ1, Tᵢ2, Tᵢ3) of the number N of IEDs within the communication cycle.

5. The method according to claim 4, **characterized in that** the number N of IEDs includes an extension IED to be subsequently connected to the shared transmission media (1) of the SA system.

6. The method according to claim 3, **characterized in that** it comprises
- predetermining the distinct transmission times (Tᵢ1, Tᵢ2, Tᵢ3) during engineering of the SA system, or during start-up f the SA system.
